(19) Europäisches Patentamt
European Patent Office
Office européen des brevets

(11) EP 3 760 672 A1

(12) **EUROPEAN PATENT APPLICATION**
published in accordance with Art. 153(4) EPC

(43) Date of publication:
**06.01.2021 Bulletin 2021/01**

(21) Application number: **19761605.5**

(22) Date of filing: **25.02.2019**

(51) Int Cl.:
***C08L 23/00*** *(2006.01)* ***C08L 23/14*** *(2006.01)*
***C08L 91/00*** *(2006.01)* ***C09J 123/00*** *(2006.01)*
***C09J 123/14*** *(2006.01)* ***C09J 191/00*** *(2006.01)*

(86) International application number:
**PCT/JP2019/007025**

(87) International publication number:
**WO 2019/167872 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2018 JP 2018035671**
**25.05.2018 JP 2018100605**

(71) Applicant: **Idemitsu Kosan Co.,Ltd.**
**Chiyoda-ku**
**Tokyo 100-8321 (JP)**

(72) Inventors:
- **KANAMARU, Masami**
  **Ichihara-shi, Chiba 299-0193 (JP)**
- **FUJII, Nozomu**
  **Ichihara-shi, Chiba 299-0193 (JP)**
- **FUJINAMI, Hiroki**
  **Ichihara-shi, Chiba 299-0193 (JP)**
- **KOGA, Asami**
  **Ichihara-shi, Chiba 299-0193 (JP)**

(74) Representative: **Gille Hrabal**
**Brucknerstrasse 20**
**40593 Düsseldorf (DE)**

# (54) RESIN COMPOSITION

(57) A resin composition containing at least one selected from the group consisting of an amorphous polyolefin resin (A-1) having a melt endotherm (ΔH-D) of less than 3 J/g and a high-viscosity oil (A-2), and a polypropylene resin (B) having a melt endotherm (ΔH-D) of 3 to 80 J/g, wherein, relative to the total amount 100% by mass of the the amorphous polyolefin resin (A-1), the high-viscosity oil (A-2) and the polypropylene resin (B), the total of the amorphous polyolefin resin (A-1) and the high-viscosity oil (A-2) is 5.0 to 99.5% by mass, and the amount of the polypropylene resin (B) is 0.5 to 95.0% by mass.

EP 3 760 672 A1

## Description

Technical Field

The present invention relates to a resin composition, and precisely to a resin composition containing a specific amorphous polyolefin resin and/or a high-viscosity oil, and a specific polypropylene resin.

Background Art

A butyl rubber (isobutylene-isoprene rubber) and a polyisobutylene have a low gas permeability and are used for tire tubes and sealing materials. When used alone, a butyl rubber and a polyisobutylene each are insufficient in strength, and a resin composition has been proposed which includes various resins blended therein (for example, see PTL 1).

However, already-existing resin compositions have a problem of poor adhesiveness. For example, PTL 1 investigates a composition of a polyisobutylene and a polyethylene resin, but the combination is insufficient in adhesion strength.

Citation List

Patent Literature

PTL 1:JP 2014-527559 A

Summary of Invention

Technical Problem

A technical problem of the present invention is to provide a resin composition excellent in adhesiveness.

Solution to Problem

The present inventors have made assiduous studies for solving the above-mentioned problem and, as a result, have found that the problem can be solved by the present invention mentioned below. Specifically, the present disclosure relates to the following:

<1> A resin composition containing at least one selected from the group consisting of an amorphous polyolefin resin (A-1) having a melt endotherm ($\Delta$H-D) of less than 3 J/g, as read on a melt endotherm curve drawn by keeping a sample at -10°C in a nitrogen atmosphere for 5 minutes and then heating it at 10°C/min, using a differential scanning calorimeter (DSC), and a high-viscosity oil (A-2), and a polypropylene resin (B) having a melt endotherm ($\Delta$H-D) of 3 J/g or more and 80 J/g or less, as read on a melt endotherm curve drawn by keeping a sample at -10°C in a nitrogen atmosphere for 5 minutes and then heating it at 10°C/min, using a differential scanning calorimeter (DSC), wherein:
relative to the total amount 100% by mass of the amorphous polyolefin resin (A-1), the high-viscosity oil (A-2) and the polypropylene resin (B), the total of the amorphous polyolefin resin (A-1) and the high-viscosity oil (A-2) is 5.0% by mass or more and 99.5% by mass or less, and the amount of the polypropylene resin (B) is 0.5% by mass or more and 95.0% by mass or less.

<2> The resin composition according to the above <1>, wherein the polypropylene resin (B) satisfies the following (1):

(1) the resin has a melting point (Tm-D) of 0°C or higher and 120°C or lower, that is defined as a peak top observed on the highest temperature side of a melt endotherm curve drawn by keeping a sample at -10°C in a nitrogen atmosphere for 5 minutes and then heating it at 10°C/min, using a differential scanning calorimeter (DSC), or does not exhibit a peak top on the highest temperature side.

<3> The resin composition according to the above <1> or <2>, wherein the limiting viscosity [$\eta$] of the polypropylene resin (B) is 0.01 dL/g or more and 2.00 dL/g or less.

<4> The resin composition according to any one of the above <1> to <3>, wherein the polypropylene resin (B) contains at least one structural unit selected from the group consisting of ethylene and an $\alpha$-olefin having 4 to 30 carbon atoms in an amount of more than 0 mol% and 20 mol% or less.

<5> The resin composition according to any one of the above <1> to <4>, wherein the amorphous polyolefin resin (A-1) contains a structural unit derived from at least one selected from the group consisting of propylene, isobutylene and isoprene.
<6> The resin composition according to any one of the above <1> to <5>, further containing a tackifying resin (C).
<7> The resin composition according to any one of the above <1> to <6>, further containing a low-viscosity oil (D).
<8> The resin composition according to any one of the above <1> to <7>, further containing a wax (E).
<9> The resin composition according to any one of the above <1> to <8>, further containing a polyolefin resin (F) not corresponding to any of the amorphous polyolefin resin (A-1) and the polypropylene resin (B).
<10> The resin composition according to the above <9>, wherein the polyolefin resin (F) has a melt endotherm (ΔH-D) of more than 80 J/g, as read on a melt endotherm curve drawn by keeping a sample at -10°C in a nitrogen atmosphere for 5 minutes and then heating it at 10°C/min, using a differential scanning calorimeter (DSC).
<11> A hot-melt adhesive containing the resin composition of any one of the above <1> to <10>.

## Advantageous Effects of Invention

The resin composition of the present invention is excellent in adhesiveness and is favorable for use as a hot-melt adhesive.

## Brief Description of Drawings

Fig. 1(a) is an explanatory view showing a method for measuring an adhesion force in Examples.
Fig. 1(b) is an explanatory view showing a method for measuring an adhesion force in Examples.
Fig. 1(c) is an explanatory view showing a method for measuring an adhesion force in Examples.

## Description of Embodiments

The resin composition of this embodiment is a resin composition containing at least one selected from the group consisting of an amorphous polyolefin resin (A-1) having a melt endotherm (ΔH-D) of less than 3 J/g and a high-viscosity oil (A-2), and a polypropylene resin (B) having a melt endotherm (ΔH-D) of 3 J/g or more and 80 J/g or less, wherein, relative to the total amount 100% by mass of the the amorphous polyolefin resin (A-1), the high-viscosity oil (A-2) and the polypropylene resin (B), the total of the amorphous polyolefin resin (A-1) and the high-viscosity oil (A-2) is 5.0% by mass or more and 99.5% by mass or less, and the amount of the polypropylene resin (B) is 0.5% by mass or more and 95.0% by mass or less.

### <Amorphous Polyolefin Resin (A-1)>

The amorphous polyolefin resin (A-1) for use in this embodiment is amorphous. The "amorphous polyolefin resin" in the present invention is a resin having a melt endotherm (ΔH-D) of less than 3 J/g, as read on a melt endotherm curve drawn by keeping a sample at -10°C in a nitrogen atmosphere for 5 minutes and then heating it at 10°C/min, using a differential scanning calorimeter (DSC).
The melt endotherm (ΔH-D) is determined by calculating the area surrounded by a line portion that contains a peak observed on the highest temperature side of a melt endotherm curve drawn through DSC measurement and a baseline, which is drawn by connecting a point on a low-temperature side where no change of the quantity of heat is present with a point on a high-temperature side where no change of the quantity of heat is present. The melt endotherm (ΔH-D) can be controlled by appropriately controlling the monomer concentration and the reaction pressure.
Preferably, the amorphous polyolefin resin (A-1) does not exhibit a melting point (Tm-D) that is defined as a peak top of the peak observed on the highest temperature side of a melt endotherm curve drawn by keeping a sample at -10°C in a nitrogen atmosphere for 5 minutes and then heating it at 10°C/min, using a differential scanning calorimeter (DSC).
Preferably, the amorphous polyolefin resin (A-1) contains a structure represented by the following formula (1):

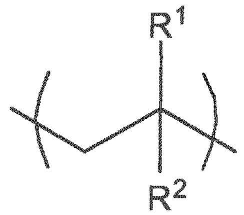

(1)

wherein $R^1$ and $R^2$ each independently represent a hydrogen atom or a hydrocarbon group having 1 to 18 carbon atoms. However, both $R^1$ and $R^2$ are not hydrogen atoms. The hydrocarbon group may be linear or branched.

Preferably, the amorphous polyolefin resin (A-1) contains an olefin monomer having a quaternary carbon. Specifically, in the formula (1), preferably, $R^1$ and $R^2$ each represent a hydrocarbon group. Here, "quaternary carbon" means a carbon atom bonding to four carbon atoms.

The amorphous polyolefin resin (A-1) may contain a structural unit derived from any of ethylene, isoprene, maleic anhydride, styrene, α-methylstyrene and the like, in addition to the structure represented by the above-mentioned formula (1).

Preferably, the amorphous polyolefin resin (A-1) contains a structural unit derived from at least one selected from the group consisting of propylene, isobutylene and isoprene.

Specific examples of the amorphous polyolefin resin (A-1) include atactic polypropylene, propylene/α-olefin copolymer, ethylene/propylene/α-olefin copolymer, polyisobutylene, isobutylene/isoprene copolymer, isobutylene/n-butylene copolymer, isobutylene/maleic anhydride copolymer, ethylene/isobutylene copolymer, ethylene/propylene/isobutylene terpolymer, ethylene/styrene/isobutylene terpolymer, ethylene/α-methylstyrene/isobutylene terpolymer, propylene/isobutylene copolymer, styrene/isobutylene copolymer, and α-methylstyrene/isobutylene copolymer.

Commercial products of the amorphous polyolefin resin (A-1) include "Tetrax" from JXTG Nippon Oil & Energy Corporation, "Indopol" from INEOS Oligomers, and "Tafthren" from Sumitomo Chemical Co., Ltd.

<High-viscosity Oil (A-2)>

"High-viscosity oil" in the present invention means an oil having a kinematic viscosity at 40°C of 250 cSt or more.

The high-viscosity oil (A-2) is not specifically limited, and examples thereof include mineral oils such as paraffinic process oil, naphthenic process oil and isoparaffinic oil, aromatic mineral oil-based hydrocarbons, synthetic resin-based hydrocarbons of low-molecular-weight materials such as ethylene-propylene copolymer, polybutene, polybutadiene, and poly(α-olefin), fatty oil-based softeners such as alkylbenzene, castor oil, linseed oil, rapeseed oil and coconut oil, and ester-based plasticizers such as dibutyl phthalate, dioctyl phthalate, dioctyl adipate and dioctyl sebacate. Above all, mineral oil-based hydrocarbons, paraffinic process oil and naphthenic process oil are preferably used. In particular, a paraffinic oil in which the carbon number of the paraffinic hydrocarbon accounts for 50% of the total carbon number is preferred.

The kinematic viscosity at 40°C of the high-viscosity oil (A-2) is generally 250 cSt or more, preferably 300 cSt or more, more preferably 330 cSt or more, even more preferably 350 cSt or more, and is preferably 100,000 cSt or less, more preferably 50,000 cSt or less, even more preferably 10,000 cSt or less, further more preferably 5,000 cSt or less, especially more preferably 1,000 cSt or less. When the kinematic viscosity at 40°C is less than 250 cSt, the oil may readily bleed out, and when it is 100,000 cSt or less, the oil is easily available. The kinematic viscosity is a value measured according to ISO 3104.

Commercial products of the high-viscosity oil (A-2) include "Diana Process Oil PW-380" and "Diana Process Oil PS-430" from Idemitsu Kosan Co., Ltd.; "AP/E Core" and "SpectraSyn" from Exxon Mobil Corporation; "Lucant" from Mitsui Chemicals, Inc.; "Synfluid" from Chevron Corporation; "Kaydol Oil" from Chevron USA; "Licocene PPA 330 TP" from Clariant Corporation; and "Durasyn" from INEOS Oligomers (all trade names).

The total content of the amorphous polyolefin resin (A-1) and the high-viscosity oil (A-2) in the resin composition is 5.0% by mass or more and 99.5% by mass or less, relative to the total amount 100% by mass of the the amorphous polyolefin resin (A-1), the high-viscosity oil (A-2) and the polypropylene resin (B). When the total content is less than 5.0% by mass, interfacial strength may lower, but when it is more than 99.5% by mass, the strength of the composition itself may lower. From these viewpoints, the total content of the amorphous polyolefin resin (A-1) and the high-viscosity oil (A-2) is, relative to the total amount 100% by mass of the the amorphous polyolefin resin (A-1), the high-viscosity oil (A-2) and the polypropylene resin (B), preferably 10% by mass or more, more preferably 15% by mass or more, even more preferably 20% by mass or more, further more preferably 30% by mass or more, and is preferably 99% by mass or less, more preferably 95% by mass or less, even more preferably 90% by mass or less, further more preferably 85% by mass or less, especially more preferably 75% by mass or less.

<Polypropylene Resin (B)>

The polypropylene resin (B) for use in this embodiment has a melt endotherm (ΔH-D) of 3 J/g or more and 80 J/g or less, as read on a melt endotherm curve drawn by keeping a sample at -10°C in a nitrogen atmosphere for 5 minutes and then heating it at 10°C/min, using a differential scanning calorimeter (DSC). When the melt endotherm (ΔH-D) is less than 3 J/g, the strength of the composition itself may be insufficient, and when it is more than 80 J/g, the interfacial adhesion strength thereof may lower. From these viewpoints, the melt endotherm (ΔH-D) is preferably 20 J/g or more, more preferably 25 J/g or more, even more preferably 27 J/g or more, further more preferably 30 J/g or more, and is preferably 50 J/g or less, more preferably 45 J/g or less, even more preferably 40 J/g or less.
The melt endotherm (ΔH-D) can be calculated in the same manner as that for the amorphous polyolefin resin (A-1) described hereinabove.
Preferably, the polypropylene resin (B) satisfies the following (1):

(1) the resin has a melting point (Tm-D) of 0°C or higher and 120°C or lower that is defined as a peak top observed on the highest temperature side of a melt endotherm curve drawn by keeping a sample at -10°C in a nitrogen atmosphere for 5 minutes and then heating it at 10°C/min, using a differential scanning calorimeter (DSC) or does not exhibit a peak top on the highest temperature side.

From the viewpoint of increasing the flexibility of the elastomer resin composition, preferably, the melting point (Tm-D) of the polypropylene resin (B) is not observed or is 0°C or higher and 120°C or lower. In the case where the melting point is observed, from the same viewpoint, it is more preferably 30°C or higher, even more preferably 35°C or higher, further more preferably 40°C or higher, and is more preferably 90°C or lower, even more preferably 85°C or lower, further more preferably 80°C or lower, further more preferably 70°C or lower.
The melting point can be controlled by appropriately controlling the monomer concentration and the reaction pressure.
The limiting viscosity [η] of the polypropylene resin (B) is preferably 0.01 dL/g or more, more preferably 0.10 dL/g or more, even more preferably 0.30 dL/g or more, further more preferably 0.40 dL/g or more, and is preferably 2.00 dL/g or less, more preferably 1.80 dL/g or less, even more preferably 1.70 dL/g or less, further more preferably 1.50 dL/g or less, further more preferably 1.00 dL/g or less. When the limiting viscosity [η] is 0.01 dL/g or more, the miscibility of the amorphous polyolefin resin (A-1) and the high-viscosity oil (A-2) with the polypropylene resin (B) can be further enhanced. When it is 2.00 dL/g or less, processability can be further improved. The same may apply also to a resin composition containing, for example, a filler such as talc.
The limiting viscosity [η] is calculated using the following equation (Huggins equation), in which the reduced viscosity ($\eta_{SP}$/c) is measured in tetralin at 135°C using an Ubbelohde viscometer.

$$\eta_{SP}/c = [\eta] + K[\eta]^2 c$$

$\eta_{SP}$/c (dL/g): reduced viscosity
[η] (dL/g): limiting viscosity
c (g/dL): polymer viscosity
K = 0.35 (Huggins constant)

The molecular weight distribution (Mw/Mn) of the polypropylene resin (B) is preferably 3.0 or less, more preferably 2.8 or less, even more preferably 2.6 or less, further more preferably 2.5 or less, and is preferably 1.5 or more, more preferably 1.6 or more, even more preferably 1.7 or more, further more preferably 1.8 or more. When the molecular weight distribution (Mw/Mn) falls within the above-mentioned range, the flexibility of the resin composition can be increased more and the stickiness of the resin composition can be further prevented.
In this embodiment, the molecular weight distribution (Mw/Mn) is a value calculated from the polystyrene-equivalent weight-average molecular weight Mw and number-average molecular weight Mn measured through gel permeation chromatography (GPC).
The polypropylene resin (B) is not specifically limited so far as the above-mentioned melt endotherm (ΔH-D) thereof satisfies the above-mentioned range, and is, for example, preferably a propylenic polymer selected from a propylene homopolymer, a propylene-ethylene block copolymer, a propylene-butene block copolymer, a propylene-α-olefin block copolymer, a propylene-ethylene random copolymer, a propylene-butene random copolymer, a propylene-ethylene-butene ternary random copolymer, a propylene-α-olefin random copolymer or a propylene-α-olefin graft copolymer, more preferably a propylenic polymer selected from a propylene homopolymer, a propylene-ethylene random

copolymer, a propylene-butene random copolymer, a propylene-α-olefin random copolymer or a propylene-ethylene-butene ternary random copolymer, and even more preferably a propylene homopolymer.

In the case where the polypropylene resin (B) is a copolymer, preferably, the copolymer contains at least one structural unit selected from the group consisting of ethylene and an α-olefin having 4 to 30 carbon atoms in an amount of more than 0 mol% and 20 mol% or less, from the viewpoint of preventing lump formation by crosslinking to increase the flexibility of the resin composition. From such viewpoints, the structural unit content is more preferably 0.5 mol% or more, even more preferably 1.0 mol% or more, and is more preferably 18.5 mol% or less, even more preferably 15.0 mol% or less, further more preferably 10.0 mol% or less.

In the case where the polypropylene resin (B) is a copolymer containing an olefin having 2 carbon atoms, preferably, the structural unit of the olefin having 2 carbon atoms (that is, ethylene monomer) accounts for more than 0 mol% and 20 mol% or less, more preferably more than 0 mol% and 18 mol% or less, even more preferably more than 0 mol% and 16 mol% or less, further more preferably more than 0 mol% and 14 mol% or less. In the case of a copolymer containing an α-olefin having 4 or more carbon atoms, the content of the α-olefin having 4 or more carbon atoms is preferably more than 0 mol% and 30 mol% or less, more preferably more than 0 mol% and 25 mol% or less, even more preferably more than 0 mol% and 20 mol% or less.

For the polypropylene resin (B), commercial products are usable. Examples thereof include "S400", "S600" and "S901" of "L-MODU" (registered trademark) (from Idemitsu Kosan Co., Ltd.). Commercial products of amorphous poly-α-olefins include "REXtac" from REXtac, LLC; "Vestoplast" from Evonik Industries AG; and "Eastoflex" and "Aerafin" from Eastman Chemical Company (all trade names). Commercial products of propylenic elastomers include "Tafmer XM", "Tafmer PN" and "Tafmer SN" from Mitsui Chemicals, Inc.; "Prime TPO" from Prime Polymer Co., Ltd.; "Versify" from Dow Chemical Corporation; "Vistamaxx" and "Linxar" from Exxon Mobile Corporation; "Licocene" from Clariant Corporation; and "Adflex" from LyondellBasell Corporation (all trade names).

The polypropylene resin (B) can be prepared by polymerizing a monomer in the presence of a polymerization catalyst such as a Ziegler-Natta catalyst or a metallocene catalyst. Above all, the polypropylene resin (B) is preferably a polypropylene resin prepared with a metallocene catalyst. A metallocene catalyst is a type of a homogeneous catalyst, and the resultant polymer is a homogeneous polymer having a narrow molecular weight distribution or a narrow composition distribution.

The content of the polypropylene resin (B) in the resin composition is 0.5% by mass or more and 95.0% by mass or less, relative to the total amount 100% by mass of the amorphous polyolefin resin (A-1), the high-viscosity oil (A-2) and the polypropylene resin (B). When the content is less than 0.5% by mass, the strength of the composition itself may lower, and when it is more than 95.0% by mass, interfacial adhesion strength may lower. From these viewpoints, the content of the polypropylene resin (B) is, relative to the total amount 100% by mass of the amorphous polyolefin resin (A-1), the high-viscosity oil (A-2) and the polypropylene resin (B), preferably 1% by mass or more, more preferably 5% by mass or more, even more preferably 10% by mass or more, further more preferably 15% by mass or more, further more preferably 25% by mass or more, and is preferably 90% by mass or less, more preferably 85% by mass or less, even more preferably 80% by mass or less, further more preferably 70% by mass or less.

The total content of the amorphous polyolefin resin (A-1), the high-viscosity oil (A-2) and the polypropylene resin (B) in the resin composition is, relative to 100% by mass of the resin composition, preferably 50% by mass or more, more preferably 70% by mass or more, even more preferably 75% by mass or more.

(Tackifying Resin (C))

The resin composition of this embodiment may further contain a tackifying resin (C).

Examples of the tackifying resin include materials which are composed of a hydrogenated derivative of an aliphatic petroleum hydrocarbon resin, a rosin derivative resin, a polyterpene resin, a petroleum resin, an oil-soluble phenolic resin or the like and are in the form of a solid, a semi-solid, or a liquid at room temperature. One alone or two or more kinds of these may be used either singly or as combined. In the present invention, in consideration of miscibility with a base polymer, a hydrogenated material is preferably used. Above all, a hydrogenated petroleum resin material excellent in heat stability is more preferred.

Examples of commercial products of the tackifying resin include "I-MARV" (from Idemitsu Kosan Co., Ltd.), "Arkon" (from Arakawa Chemical Industries, Ltd.), "Quinton" (from Zeon Corporation), "T-REZ" (from JXTG Nippon Oil & Energy Corporation), "Escorez" and "Oppera" (all from ExxonMobil Chemical Corporation), "Eastotac", "Regalite", "Regalrez" and "Plastolyn" (all from Eastman Chemical Company), "Sukolez" (from Kolon Corporation), and "Wingtack" and "Norsolene" (all from Cray Valley Corporation) (all trade names).

A tackifier produced using an essential oil derived from orange as a raw material is also usable, and examples thereof include "Clearon" (from Yasuhara Chemical Co., Ltd.), and "Sylvalite" and "Sylvares" (from Arizona Chemical Corporation) (all trade names).

A tackifier produced using a rosin or the like as a raw material is also usable, and examples thereof include

"Haritack" and "Neotall" (from Harima Chemicals Group, Inc.), and "Ester Gum" and "Pensel" (from Arakawa Chemical Industries, Ltd.) (all trade names).

The content of the tackifying resin (C) in the resin composition of the present invention is, from the viewpoint of increasing adhesiveness, coatability and improving wettability to adherends through viscosity reduction, and relative to the total content, 100 parts by mass of the amorphous polyolefin resin (A-1), the high-viscosity oil (A-2) and the polypropylene resin (B) in the resin composition, preferably 20 parts by mass or more, more preferably 30 parts by mass or more, even more preferably 40 parts by mass or more, further more preferably 50 parts by mass or more, and is preferably 200 parts by mass or less, more preferably 150 parts by mass or less, even more preferably 120 parts by mass or less, further more preferably 100 parts by mass or less.

The softening point of the tackifying resin is not specifically limited. However, when the softening point is too high, coatability with hot-melt adhesive worsens owing to viscosity increase during coating, and when the softening point is too low, heat stability of hot-melt adhesive worsens and, if so, scorching may occur in a melter to have some negative influence on adhesiveness and to cause offensive odor emission. For these reasons, the softening point of the tackifying resin is preferably 80°C or higher, more preferably 85°C or higher, even more preferably 90°C or higher, and is preferably 130°C or lower, more preferably 120°C or lower, even more preferably 110°C or lower.

(Low-viscosity Oil (D))

The resin composition of this embodiment may further contain a low-viscosity oil (D). "Low-viscosity oil" in the present invention means an oil having a kinematic viscosity at 40°C of less than 250 cSt.

The low-viscosity oil (D) is not specifically limited, and examples thereof include a mineral oil such as a paraffinic process oil, a naphthenic process oil and an isoparaffinic oil; an aromatic, mineral oil-based hydrocarbon; a synthetic resin-based hydrocarbon of a low-molecular substance such as polybutene, polybutadiene, and poly($\alpha$-olefin); an aliphatic oil-based softener such as alkylbenzene, castor oil, linseed oil, rapeseed oil and coconut oil; and an ester plasticizer such as dibutyl phthalate, dioctyl phthalate, dioctyl adipate, and dioctyl sebacate. Above all, a mineral oil-based hydrocarbon, a paraffinic process oil and a naphthenic process oil are preferably used. In particular, a paraffinic oil in which the carbon number of the paraffinic hydrocarbon accounts for 50% of the total carbon number is preferred.

Also, a mineral oil-based hydrocarbon having a weight-average molecular weight of 50 to 2,000, especially 100 to 1,500 is preferred. The kinematic viscosity at 40°C of the low-viscosity oil (D) is preferably less than 250 cSt, more preferably 3 to 220 cSt, even more preferably 5 to 200 cSt. The kinematic viscosity is a value measured according to ISO 3104.

Commercial products of the low-viscosity oil (D) include "Diana Process Oil PW-32", "Diana Process Oil PW-90" (90 cSt), "Diana Process Oil PW-150", "Diana Process Oil PS-32", "Diana Process Oil PS-90" and "ParaLux Oil" from Idemitsu Kosan Co., Ltd. (all trade names).

The content of the low-viscosity oil (D) in the resin composition of the present invention is, from the viewpoint of increasing adhesiveness, coatability and improving wettability to adherends through viscosity reduction, and relative to the total content, 100 parts by mass of the amorphous polyolefin resin (A-1), the high-viscosity oil (A-2) and the polypropylene resin (B) in the resin composition, preferably 5 parts by mass or more, more preferably 10 parts by mass or more, and is preferably 200 parts by mass or less, more preferably 100 parts by mass or less, even more preferably 50 parts by mass or less.

(Wax (E))

The resin composition of this embodiment may further contain a wax (E).

Examples of the wax include animal wax, vegetable wax, carnauba wax, candelilla wax, Japan wax, bees wax, mineral wax, petroleum wax, paraffin wax, microcrystalline wax, petrolatum, higher fatty acid wax, higher fatty acid ester wax, and Fischer-Tropsch wax.

However, the content of the wax (E) in the resin composition of the present invention is, from the viewpoint of improving coatability, and relative to the total content, 100 parts by mass of the amorphous polyolefin resin (A-1), the high-viscosity oil (A-2) and the polypropylene resin (B) in the resin composition, preferably less than 25 parts by mass, and more preferably no wax is added to the resin composition. Increase in wax addition worsens coatability.

(Other Additives)

As needed, the resin composition of this embodiment may further contain various additives such as a plasticizer, an inorganic filler, and an antioxidant.

Examples of the plasticizer include phthalates, adipates, fatty acid esters, glycols, epoxy-type polymer plasticizers.

Examples of the inorganic filler include talc, calcium carbonate, barium carbonate, wollastonite, silica, clay, mica, kaolin, titanium oxide, diatomaceous earth, urea resin, styrene beads, starch, barium sulfate, calcium sulfate, magnesium silicate, magnesium carbonate, alumina and quartz powder.

Examples of the antioxidant include phosphorus-based antioxidants such as trisnonylphenyl phosphite, distearylpentaerythritol diphosphite, "Adekastab 1178" (from ADEKA Corporation), "Sumilizer TNP" (from Sumitomo Chemical Co., Ltd.), "Irgafos 168" (from BASF Corporation), and "Sandstab P-EPQ" (from Sandoz K.K.); phenol-based antioxidants such as 2,6-di-t-butyl-4-methylphenol, n-octadecyl-3-(3',5'-di-t-butyl-4'-hydroxyphenyl) propionate, "Sumilizer BHT" (from Sumitomo Chemical Co., Ltd.), and "Irganox 1010" (from BASF Corporation); and sulfur-based antioxidants such as dilauryl-3,3'-thiodipropionate, pentaerythritol tetrakis(3-laurylthiopropionate), "Sumilizer TPL" (from Sumitomo Chemical Co., Ltd.), "DLTP "Yoshitomi"" (from Mitsubishi Chemical Corporation), and "AntiOx L" (from NOF Corporation).

Further, a crosslinking agent and a crosslinking promoter may be added to the resin composition of this embodiment to form partial crosslinking in the composition.

The crosslinking agent includes an organic peroxide, sulfur, a sulfur compound, a phenolic vulcanizing agent such as a phenolic resin. Among these, an organic peroxide is preferred. Specific examples of the organic peroxide include 2,5-dimethyl-2,5-di(t-butylperoxy)-hexane, 2,5-dimethyl-2,5-di(t-butylperoxy)-3-hexyne, 2,5-dimethyl-2,5-di(benzoylperoxy)hexane, t-butyl peroxybenzoate, dicumyl peroxide, t-butylcumyl peroxide, diisopropylbenzene hydroperoxide, 1,3-bis(t-butylperoxyisopropyl)benzene, benzoyl peroxide, 1,1-di(t-butylperoxy)-3,3,5-trimethylcyclohexane, di-t-butyl peroxide, n-butyl-4,4-bis(t-butylperoxy) valerate, p-chlorobenzoyl peroxide, 2,4-dichlorobenzoyl peroxide, t-butylperoxyisopropyl carbonate, diacetyl peroxide, and lauroyl peroxide. Among these, from the viewpoint of little smell and scorch stability, 2,5-dimethyl-2,5-di-(t-butylperoxy)hexane, 2,5-dimethyl-2,5-di-(t-butylperoxy)-3-hexyne, 1,3-bis(t-butylperoxyisopropyl)benzene, 1,1-bis(t-butylperoxy)-3,3,5-trimethylcyclohexane, and n-butyl-4,4-bis(t-butylperoxy)valerate are preferred; and above all, 1,3-bis(t-butylperoxyisopropyl)benzene is most preferred.

Examples of the crosslinking promoter include N-methyl-N,4-dinitrosoaniline, nitrosobenzene, diphenylguanidine, divinylbenzene, trimethylolpropane tri(meth)acrylate, ethylene di(meth)acrylate, diethylene glycol di(meth)acrylate, allyl (meth)acrylate, diallyl phthalate, triallyl cyanurate, quinone dioxime, p,p'-dibenzoylquinone dioxime, bismaleimide, phenylenebismaleimide, trimethylolpropane-N,N'-m-phenylene dimaleimide, polyethylene glycol dimethacrylate, vinyl butyrate, vinyl stearate, unsaturated silane compounds, and sulfur. Using such a crosslinking promoter, uniform and mild crosslinking reaction is expected.

Among these crosslinking promoters, triallyl cyanurate, ethylene glycol dimethacrylate, divinylbenzene and bismaleimide are preferred. These are easily handleable and are well miscible with the amorphous polyolefin resin (A-1), the high-viscosity oil (A-2) and the polypropylene resin (B) that are main ingredients of the material to be crosslinked, and in addition, these have an action to solubilize organic peroxides and act as a dispersant for organic peroxides, and therefore can give a resin composition capable of attaining a homogeneous crosslinking effect by heat treatment to provide a good balance between flexibility and physical properties.

One alone or two or more kinds of the crosslinking agent and the crosslinking promoter can be used either singly or as combined.

In the case of using a crosslinking agent and a crosslinking promoter, they may be used in any arbitrary amount falling within a range of 0.1 to 5 parts by mass relative to the total amount, 100 parts by mass of the components (A-1), (A-2) and (B) to (E) to control the crosslinking degree of the resultant product.

In the case where an unsaturated silane compound is used as a crosslinking promoter, the composition may be further brought into contact with water in the presence of a silanol condensation catalyst to accelerate crosslinking reaction.

As needed, the resin composition of this embodiment may further contain a polyolefin resin (F) not corresponding to any of the amorphous polyolefin resin (A-1) or the olefin polymer (B). Specifically, the polyolefin resin (F) is a polyolefin resin having a melt endotherm ($\Delta$H-D) of more than 80 J/g, as read on a melt endotherm curve drawn by keeping a sample at -10°C in a nitrogen atmosphere for 5 minutes and then heating it at 10°C/min, using a differential scanning calorimeter (DSC). Specific examples of such a polyolefin resin (F) include polyethylene, polypropylene, ethylene/$\alpha$-olefin copolymer, and propylene/$\alpha$-olefin copolymer. Commercial products of the polyolefin include "Prime Polypro Y-2045GP" (propylene-ethylene copolymer) from Prime Polymer Co., Ltd.

[Production Method for Resin Composition]

The resin composition of the present invention can be produced by dryblending an amorphous polyolefin resin (A-1), a high-viscosity oil (A-2) and an olefin polymer (B), with preferably at least one selected from the group consisting of a tackifying resin (C), a low-viscosity oil (D) and a wax (E), and optionally with any other various additives, using a Henschel mixer or the like, followed by meltkneading the blend in a single-screw or twin-screw extruder, or a Plastomill, a Banbury mixer or the like.

<Hot-melt Adhesive>

The hot-melt adhesive of the present invention contains the above-mentioned resin composition. The hot-melt adhesive of the present invention is excellent in adhesiveness.

Examples

Next, the present invention will be described in more detail with reference to Examples, but the present invention is by no means limited to these Examples.

The raw materials used in Examples and Comparative Examples are as follows.

<Amorphous Polyolefin Resin (A-1)>

(A1-1) "Tetrax 3T": polyisobutylene, from JXTG Nippon Oil & Energy Corporation, melt endotherm (ΔH-D) = 0 J/g
(A1-2) "Tetrax 4T": polyisobutylene, from JXTG Nippon Oil & Energy Corporation, melt endotherm (ΔH-D) = 0 J/g
(A1-3) "Tafthren X1102": amorphous polypropylene, from Sumitomo Chemical Co., Ltd., melt endotherm (ΔH-D) = 0 J/g
(A1-4) Propylenic polymer (A1-4) produced in the following Production Example 2, melt endotherm (ΔH-D) = 0 J/g
(A1-5) "Indopol H-50": polyisobutylene, from INEOS Oligomers, melt endotherm (ΔH-D) = 0 J/g
(A1-6) "Indopol H-18000": polyisobutylene, from INEOS Oligomers, melt endotherm (ΔH-D) = 0 J/g
(A1-7) "Oppanol N50SF": polyisobutylene, from BASF Corporation, melt endotherm (ΔH-D) = 0 J/g
(A1-8) "YS Resin PX300N": terpene resin, from Yasuhara Chemical Co., Ltd., melt endotherm (ΔH-D) = 0 J/g
(A1-9) "Indopol H-2100": polyisobutylene, from INEOS Oligomers, melt endotherm (ΔH-D) = 0 J/g

Production Example 1

[Synthesis of (1,2'-diphenylsilylene)(2,1'-diphenylsilylene)bis(3-trimethylsilylmethylindenyl) zirconium dichloride (transition metal compound represented by the following formula (a12)]

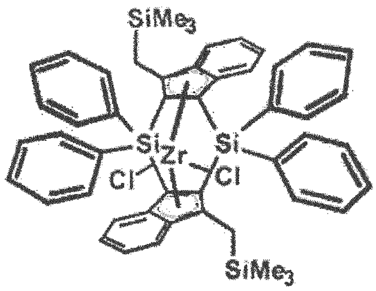

(a 12)

15.0 g (76.9 mmol) of 2-bromoindene was dissolved in 200 mL of ether, and a hexane solution of n-butyl lithium (2.65 M, 29.0 mL, 76.9 mmol) was dropwise added thereto at 0°C. This was heated up to 25°C, stirred for 3 hours, and then t-butyl lithium (1.69 M, 91.0 mL, 153.8 mmol) was dropwise added thereto at 0°C. After this was stirred at 25°C for 3 hours, 8.0 mL (38.5 mmol) of dichlorodiphenylsilane was added thereto at -78°C, then the resultant was heated up to 25°C, and stirred overnight. 80 mL of tetrahydrofuran (THF) was added to the reaction solution, then 8.0 mL (38.5 mmol) of dichlorodiphenylsilane was added at -78°C, the resultant was heated up to 25°C and stirred overnight. 100 mL of water was added to the reaction mixture, followed by stirring, and a white precipitate was thus formed. The precipitate was taken out through filtration and dried under reduced pressure to give 4.95 g of (1,2'-diphenylsilylene)(2,1'-diphenylsilylene)bis(indene) (yield 22%).

Results in measurement by $^1$H-NMR (500 MHz, $CDCl_3$) were: δ 4.44 (2H,-CH-), 6.64-7.64 (30H, -CH=, Si-Ph, Ar-H).

50 mL of THF and 90 mL of ether were added to 4.95 g (8.3 mmol) of (1,2'-diphenylsilylene)(2,1'-diphenylsilylene)bis(indene), and n-butyl lithium (2.65 M, 6.6 mL, 17.5 mmol) was added thereto at -20°C. After this was stirred at 25°C for 4 hours, the formed yellowish-white solid was taken out through filtration and dried. The solid was dissolved in 40 mL of THF, then 2.4 mL (16.2 mmol) of methyltrimethylsilane iodide was added thereto at 0°C, the resultant was stirred at 25°C for 3 hours, and then further stirred with heating at 70°C for 3 hours. The reaction solution was left cooled,

25 mL of water was added thereto for liquid-liquid separation, and the solution was dried to evaporate the solvent to give 4.28 g of (1,2'-diphenylsilylene)(2,1'-diphenylsilylene)bis(3-trimethylsilylmethylindene) as a yellowish-white solid (yield 67%).

Results in measurement by $^1$H-NMR (500 MHz, $CDCl_3$) were: $\delta$ 0.88, 1.20 (4H, $-CH_2$-Si, 4.08 (2H, -CH-), 7.02-7.80 (28H, Si-Ph, Ar-H).

15 mL of THF and 20 mL of ether were added to 1.49 g (1.9 mmol) of (1,2'-diphenylsilylene)(2,1'-diphenylsilylene)bis(3-trimethylsilylmethylindene), and 1.5 mL of n-butyl lithium (2.65 M) was added thereto at -20°C. After performing stirring at 25°C for 6 hours, the formed yellowish-white precipitate was taken out through filtration and dried. The solid was dissolved in 25 mL of dichloromethane, and 0.37 g (1.6 mmol) of zirconium tetrachloride suspended in 10 mL of dichloromethane was added thereto at 0°C. After performing stirring overnight at 25°C, this was filtered, and the mother liquid was concentrated to give 0.85 g of (1,2'-diphenylsilylene)(2,1'-diphenylsilylene)bis(3-trimethylsilylmethylindenyl) zirconium dichloride (yield 57%).

Results in measurement by $^1$H-NMR (500 MHz, $CDCl_3$) were: $\delta$ -0.42 (s, $Si(CH_3)_3$, 18H); 2.16, 2.46 (d, $-CH_2$-Si, 4H); 6.9-7.6 (m, Ar-H, Ph-Si, 26H).

Production Example 2

(Preparation of Propylenic Polymer)

In a nitrogen atmosphere and at room temperature, 400 mL of heptane and 0.4 mmol of triisobutyl aluminum were put into a heat-dried 1-liter autoclave, followed by stirring, and as a catalyst species, 0.2 micromole of (1,2'-diphenylsilylene)(2,1'-diphenylsilylene)bis(3-trimethylsilylmethylindenyl) zirconium dichloride and as a co-catalyst, 0.8 micromole of dimethylanilinium tetrakis(pentafluorophenyl) borate were added. Subsequently, 0.05 MPa of hydrogen was charged thereinto, and then with heating up to 40°C and keeping the pressure at 0.85 MPa with propylene, this was polymerized for 19 minutes. After the polymerization reaction, the reaction product and methanol were put into an autoclave, the resultant was fully stirred, and the contents were dried to give 128 g of a propylenic polymer (A1-4).

<High-viscosity Oil (A-2)>

(A2-1) "Diana Process Oil PW-380": oil from Idemitsu Kosan Co., Ltd., kinematic viscosity at 40°C 400 cSt
(A2-2) "Licocene PPA 330 TP": amorphous propylene/ethylene copolymer, from Clariant Corporation, kinematic viscosity at 150°C 450 cSt
(A2-3) "Lucant LX900Z": ethylene/$\alpha$-olefin copolymer, from Mitsui Chemicals, Inc., kinematic viscosity at 40°C 400 cSt or more
(A2-4) "Durasyn PAO 180R": poly-$\alpha$-olefin, from INEOS Oligomers, kinematic viscosity at 40°C 927.5 cSt
(A2-5) "Lucant LX400": ethylene/$\alpha$-olefin copolymer, from Mitsui Chemicals, Inc., kinematic viscosity at 40°C 400 cSt or more

<Polypropylene Resin (B)>

(B-1) "L-MODU S400": polypropylene resin produced with metallocene catalyst, from Idemitsu Kosan Co., Ltd., melt endotherm ($\Delta$H-D) = 36 J/g, melting point (Tm-D) = 80°C, limiting viscosity [$\eta$] = 0.4 dL/g
(B-2) "L-MODU S600": polypropylene resin produced with metallocene catalyst, from Idemitsu Kosan Co., Ltd., melt endotherm ($\Delta$H-D) = 38 J/g, melting point (Tm-D) = 80°C, limiting viscosity [$\eta$] = 0.6 dL/g
(B-3) "L-MODU S901": polypropylene resin produced with metallocene catalyst, from Idemitsu Kosan Co., Ltd., melt endotherm ($\Delta$H-D) = 37 J/g, melting point (Tm-D) = 80°C, limiting viscosity [$\eta$] = 0.9 dL/g
(B-4) "Vistamaxx 8880": propylenic elastomer, from Exxon Mobile Corporation, melt endotherm ($\Delta$H-D) = 55 J/g, melting point (Tm-D) = 100°C, limiting viscosity [$\eta$] = 0.3 dL/g, melt viscosity at 190°C = 1,100 mPa·s
(B-5) "Vistamaxx 8780": propylenic elastomer, from Exxon Mobile Corporation, melt endotherm ($\Delta$H-D) = 30 J/g, melting point (Tm-D) = 100°C, limiting viscosity [$\eta$] = 0.35 dL/g, melt viscosity at 190°C = 4,300 mPa·s
(B-6) "Vistamaxx 8380": propylenic elastomer, from Exxon Mobile Corporation, melt endotherm ($\Delta$H-D) = 30 J/g, melting point (Tm-D) = 100°C, limiting viscosity [$\eta$] = 0.4 dL/g, melt viscosity at 190°C = 7,800 mPa·s
(B-7) "Licocene 1602": propylenic elastomer, from Clariant Corporation, melt endotherm ($\Delta$H-D) = 35 J/g, melting point (Tm-D) = 70°C, limiting viscosity [$\eta$] = 0.36 dL/g, melt viscosity at 190°C = 2,800 mPa·s

(B-8) "Aerafin 180": propylenic elastomer, from Eastman Chemical Company, melt endotherm (ΔH-D) = 30 J/g, melting point (Tm-D) = 110°C, limiting viscosity [η] = 0.49 dL/g, melt viscosity at 190°C =20,000 mPa·s
(B-9) "Eastoflex P1010": propylene homopolymer, from Eastman Chemical Company, melt endotherm (ΔH-D) = 30 J/g, melting point (Tm-D) = 130°C, limiting viscosity [η] = 0.15 dL/g, melt viscosity at 190°C =1,000 mPa·s
(B-10) "Vestoplast 708": C3/C2/C4 copolymer, from Evonik Industries AG, melt endotherm (ΔH-D) = 40 J/g, melting point (Tm-D) = 105°C, limiting viscosity [η] = 0.40 dL/g, melt viscosity at 190°C =8,100 mPa·s
(B-11) "Vestoplast 704": C3/C2/C4 copolymer, from Evonik Industries AG, melt endotherm (ΔH-D) = 35 J/g, melting point (Tm-D) = 95°C, limiting viscosity [η] = 0.34 dL/g, melt viscosity at 190°C = 3,300 mPa·s
(B-12) "Vestoplast 308": C4/C3/C2 copolymer, from Evonik Industries AG, melt endotherm (ΔH-D) = 10 J/g, melting point (Tm-D) = 45°C, limiting viscosity [η] = 0.40 dL/g, melt viscosity at 190°C = 12,000 mPa·s
(B-13) "Vestoplast 828": C4/C3/C2 copolymer, from Evonik Industries AG, melt endotherm (ΔH-D) = 25 J/g, melting point (Tm-D) = 160°C, limiting viscosity [η] = 0.53 dL/g, melt viscosity at 190°C = 28,000 mPa·s

<Tackifying Resin (C)>

(C-1) "ESCOREZ 5300": hydrogenated petroleum resin, from Tonen Chemical Corporation

<Low-viscosity Oil (D)>

(D-1) "Diana Process Oil PW-90": paraffinic oil, from Idemitsu Kosan Co., Ltd., kinematic viscosity at 40°C 90 cSt

<Wax (E)>

(E-1) "Hi-wax NP506": polypropylene wax, from Mitsui Chemicals, Inc.

<Other Polypropylene Resin (polyolefin resin (F))>

(F-1) "Prime Polypro Y-2045GP": propylene-ethylene copolymer, from Prime Polymer Co., Ltd., ethylene content = 4% by mass

The physical properties of the amorphous polyolefin resin (A-1) and the polypropylene resin (B) were measured according to the following methods.

[DSC Measurement]

Using a differential scanning calorimeter ("DSC-7" from PerkinElmer Co., Ltd.), 10 mg of a sample was kept in a nitrogen atmosphere at -10°C for 5 minutes, and then heated at 10°/min. From the resultant melt endotherm curve, the melt endotherm (ΔH-D) was determined. In addition, from the peak top of the peak observed on the highest temperature side of the resultant melt endotherm curve, the melting point (Tm-D) was determined.

The melt endotherm (ΔH-D) is calculated as follows. A line drawn by connecting a point on the low-temperature side with no heat quantity change and a point on the high-temperature side with no heat quantity change is referred to as a baseline, and the area surrounded by the baseline and a line portion including peaks of the melt endotherm curve drawn through DSC measurement using a differential scanning calorimeter (DSC-7, from Perkin Elmer, Inc.) is calculated to determine the melt endotherm.

[Limiting Viscosity [η]]

Using a viscometer (from Rigo Co., Ltd., trade name: "VMR-053U-PC·F01") with an Ubbelohde-type viscosity tube (bulb volume at measurement time: 2 to 3 mL, capillary diameter: 0.44 to 0.48 mm), and using tetralin as a solvent, a solution of 0.02 to 0.16 g/dL was measured at 135°C.

(Melt Viscosity at 190°C)

According to ASTM D3236 and using a Brookfield rotatory viscometer, the melt viscosity (B-type viscosity) of the resin composition was measured at 190°C.

Examples 1 to 73 and Comparative Examples 1 to 14

Using Labo Plastomill, the components shown in Tables 1 to 7 relating to the kind and the blending amount

thereof were melt-kneaded at 230°C for 3 minutes to prepare resin compositions. In Tables 1 to 7, the unit of the blending amount is % by mass. Also in Tables 1 to 7, the blank means no component.

(Evaluation)

Under the measurement conditions shown below, the properties of the resin compositions of Examples and Comparative Examples were measured. The results are shown in Tables 1 to 7.

(1) Adhesion Force

A method for measuring adhesion force is described with reference to Figs. 1(a) to 1(c).

First, on a lower part (forward part in Fig. 1) of a polypropylene film 2 (140 mm × 75 mm × 20 μm) washed with acetone, a press-molded product 1 (25 mm × 15 mm × 1 mm) of the resin composition shown in Tables 1 and 3 was put, and a polypropylene film 3 similar to the polypropylene film 2 was further put thereon. These were pressed at 120°C for 4 minutes at 5 MPa to give a pressed sample 4 (Fig. 1(a)). In the pressed sample 4, the press-molded product 1 is a press-molded product 1a having a pressed and broadened shape (Fig. 1(b)).

Next, the resultant pressed sample 4 was cut into a strip specimen having a width of 25 mm (cut along the dotted line in Fig. 1(b)) to give a measurement sample 5 (Fig. 1(b)). Using a tensile tester, the measurement sample 5 was subjected to a peel test in which the polypropylene film 2 of the measurement sample 5 was pulled in the arrow A direction while the polypropylene film 3 thereof was pulled in the arrow B direction under the conditions of 180°, a pulling rate of 100 mm/sec, and 23°C. The test was performed three times. Data of the maximum adhesion force in each test were averaged to give an adhesion force of each sample (Fig. 1(c)).

(2) Viscosity Measurement with B-type Viscometer

According to ASTM D3236 and using a Brookfield rotatory viscometer, the melt viscosity (B-type viscosity) of each resin composition shown in Table 2 was measured at 160°C.

(3) Peel Strength (T-Peel Strength)

3 $g/m^2$ of the resin composition shown in Table 2 was applied to a nonwoven fabric (NW) under the conditions of at a coating temperature of 150°C, at a line speed of 150 m/min, and a spiral diameter of 15 mm, then a polyethylene film (PE) was overlaid and bonded by pressing under a pressure of 1 MPa. After being left at room temperature (23°C) for 4 weeks, the thus-bonded sample was cut to a width of 25 mm in a direction (CD direction) perpendicular to the traveling direction of the substrate of the bonded sample, and the T-peel strength (peel strength) thereof was measured. The measurement environment was as follows: 23°C and 50% RH, the peeling speed was set to 100 mm/min, and an average of two maximum values was determined to be a peel strength value.

T-peel strength is an index indicating the strength of a bonding force, and as the strength is higher, peeling is less likely to occur, and therefore a higher T-peel strength is preferred.

Table 1

| | | | Comparative Example | Example | | | | | | | | |
|---|---|---|---|---|---|---|---|---|---|---|---|---|
| | | | 1 | 3 | 4 | 2 | 5 | 6 | 18 | 19 | 1 | 20 |
| Amorphous Polyolefin Resin (A-1) | A1-1 | Tetrax 3T | 100 | 70 | 50 | 50 | 50 | 50 | 33 | 30 | 30 | 20 |
| High-Viscosity Oil (A-2) | A2-1 | PW 380 | | | | | | | | | | 20 |
| Polypropylene Resin (B) | B-1 | L-MODU S400 | | | 50 | | | | 65 | 65 | | 60 |
| | B-2 | L-MODU S600 | | 30 | | 50 | | | | | 70 | |
| | B-4 | Vistamaxx 8880 | | | | | 50 | | | | | |
| | B-5 | Vistamaxx 8780 | | | | | | 50 | | | | |
| Polypropyl ene Resin (F) | F-1 | Y-2045 GP | | | | | | | 2 | 5 | | |
| Adhesion Force at 23°C (N) | | | 0.4 | 1.3 | 2.5 | 2.3 | 1.0 | 1.5 | 0.6 | 0.5 | 0.5 | 1.5 |

Table 2

| | | | Example | | | | | | | | Comparative Example |
|---|---|---|---|---|---|---|---|---|---|---|---|
| | | | 10 | 11 | 12 | 13 | 14 | 15 | 16 | 17 | 2 |
| Amorphous Polyolefin Resin (A-1) | A1-1 | Tetrax 3T | 15 | 30 | 30 | 30 | 30 | 15 | 15 | | |
| | A1-2 | Tetrax 4T | | | | | | | | 15 | |
| Polypropylene Resin (B) | B-1 | L-MODU S400 | 55 | 40 | 30 | 20 | 10 | | | 40 | 55 |
| | B-2 | L-MODU S600 | | | | 20 | | | | | |
| | B-3 | L-MODU S901 | | | | | 20 | | | | |
| | B-4 | Vistamaxx 8880 | | | | | | 55 | | | |
| | B-5 | Vistamaxx 8780 | | | | | | | 55 | | |
| Tackifying Resin (C) | C-1 | Escorez 5300 | 30 | 30 | 40 | 30 | 40 | 30 | 30 | 30 | 30 |
| Low-Viscosity Oil (D) | D-1 | PW90 | | | | | | | | 15 | 15 |
| B-type Viscosity at 160°C (mPa·s) | | | 5,200 | 2,050 | 4,370 | 4,440 | 6,530 | 4,300 | 4,200 | 2,100 | 3,710 |
| Peel Strength at 23°C (gf) | | | 102 | 166 | 218 | 176 | 116 | 85 | 92 | 153 | 73 |

Table 3

| | | | Comparative Example | Example | | | | | | | | | | |
|---|---|---|---|---|---|---|---|---|---|---|---|---|---|---|
| | | | 3 | 26 | 27 | 28 | 29 | 7 | 9 | 21 | 23 | 24 | 30 | 25 |
| Amorphous Polyolefin Resin (A-1) | A1-5 | Indopol H-50 | | 30 | | | | | | | | | | |
| | A1-6 | Indopol H-18000 | | | 30 | | | | | | | | | |
| | A1-7 | Oppanol N50SF | | | | 30 | | | | | | | | |
| | A1-8 | YS Resin PX300N | | | | | 30 | | | | | | | |
| | A1-3 | Tafthren X1102 | | | | | | 50 | | | | | | |
| High-Viscosity Oil (A-2) | A2-1 | PW380 | | | | | | | 30 | 20 | | | | |
| | A2-2 | Licocene PPA330TP | | | | | | | | 20 | 30 | | | |
| | A2-3 | Lucant LX900Z | | | | | | | | | | 30 | | |
| | A2-5 | Lucant LX400 | | | | | | | | | | | 30 | |
| | A2-4 | Durasyn PAO 180R | | | | | | | | | | | | 30 |
| Polypropylene Resin (B) | B-1 | L-MODU S400 | 100 | 70 | 70 | 70 | 70 | 50 | | 60 | 70 | 70 | 70 | 70 |
| | B-2 | L-MODU S600 | | | | | | | 70 | | | | | |
| Adhesion Force at 23°C (N) | | | 0.1 | 1.0 | 0.7 | 0.8 | 0.5 | 2.5 | 0.5 | 1.3 | 0.7 | 0.7 | 0.6 | 0.6 |

Table 4

| | | | Example | | | | | | | | | Comparative Example | | | | | | | |
|---|---|---|---|---|---|---|---|---|---|---|---|---|---|---|---|---|---|---|---|
| | | | 8 | 31 | 32 | 33 | 34 | 35 | 36 | 37 | 38 | 7 | 8 | 9 | 10 | 11 | 12 | 13 | 14 |
| Amorphous Polyolefin Resin (A-1) | A1-4 | Propylenic polymer obtained in Production Example 2 | 50 | 50 | 50 | 50 | 50 | 50 | 50 | 50 | 50 | | | | | | | | |
| Polypropylene Resin (B) | B-2 | L-MODU S600 | 50 | | | | | | | | | | | | | | | | |
| | B-6 | Vistamaxx 8380 | | 50 | | | | | | | | 100 | | | | | | | |
| | B-7 | Licocene 1602 | | | 50 | | | | | | | | 100 | | | | | | |
| | B-8 | Aerafin 180 | | | | 50 | | | | | | | | 100 | | | | | |
| | B-9 | Eastoflex P1010 | | | | | 50 | | | | | | | | 100 | | | | |
| | B-10 | Vestoplast 708 | | | | | | 50 | | | | | | | | 100 | | | |
| | B-11 | Vestoplast 704 | | | | | | | 50 | | | | | | | | 100 | | |
| | B-12 | Vestoplast 308 | | | | | | | | 50 | | | | | | | | 100 | |
| | B-13 | Vestoplast 828 | | | | | | | | | 50 | | | | | | | | 100 |
| Adhesion Force at 23°C (N) | | | 1.5 | 1.2 | 1.4 | 1.8 | 2.2 | 2.4 | 2.6 | 2.7 | 2.0 | 0.4 | 0.1 | 0.4 | 0.2 | 0.4 | 0.4 | 0.3 | 0.4 |

Table 5

| | | | Example | | Comparative Example | Example | | | | | | | | | | Comparative Example | |
|---|---|---|---|---|---|---|---|---|---|---|---|---|---|---|---|---|---|
| | | | 41 | 42 | 5 | 39 | 43 | 44 | 45 | 46 | 47 | 48 | 49 | 50 | 40 | 4 | 6 |
| Amorphous Polyolefin Resin (A-1) | A1-4 | Propylenic Polymer obtained in Production Example 2 | 35 | 21 | | 20 | 20 | 20 | 20 | 20 | 20 | 20 | 20 | 20 | 12 | | |
| Polypropylene Resin (B) | B-1 | L-MODU S400 | 35 | 49 | 70 | 20 | | | | | | | | | 28 | 40 | |
| | B-6 | Vistamaxx 8380 | | | | | 20 | | | | | | | | | | |
| | B-7 | Licocene 1602 | | | | | | 20 | | | | | | | | | |
| | B-8 | Aerafin 180 | | | | | | | 20 | | | | | | | | |
| | B-9 | Eastoflex P1010 | | | | | | | | 20 | | | | | | | |
| | B-10 | Vestoplast 708 | | | | | | | | | 20 | | | | | | 40 |
| | B-11 | Vestoplast 704 | | | | | | | | | | 20 | | | | | |
| | B-12 | Vestoplast 308 | | | | | | | | | | | 20 | | | | |
| | B-13 | Vestoplast 828 | | | | | | | | | | | | 20 | | | |
| Tackifying Resin (C) | C-1 | Escorez 5300 | 20 | 20 | 20 | 40 | 40 | 40 | 40 | 40 | 40 | 40 | 40 | 40 | 40 | 40 | 40 |
| Low-Viscosity Oil (D) | D-1 | PW-90 | 10 | 10 | 10 | 20 | 20 | 20 | 20 | 20 | 20 | 20 | 20 | 20 | 20 | 20 | 20 |
| Adhesion Force at 23°C (N) | | | 3.2 | 2.8 | 1.2 | 3.5 | 4.0 | 3.4 | 3.2 | 2.8 | 3.6 | 3.4 | 3.8 | 3.1 | 3.0 | 1.5 | 2.4 |

Table 6

| | | | Example | | | | | | | | | | | | | |
|---|---|---|---|---|---|---|---|---|---|---|---|---|---|---|---|---|
| | | | 22 | 67 | 69 | 71 | 73 | 51 | 52 | 53 | 54 | 55 | 56 | 57 | 58 | 59 |
| Amorphous Polyolefin Resin (A-1) | A1-4 | Propylenic Polymer obtained in Production Example 2 | 20 | 10 | 10 | 10 | 10 | 35 | 35 | 35 | 35 | 35 | 35 | 35 | 35 | 35 |
| High-Viscosity Oil (A-2) | A2-1 | PW380 | 20 | | | | | | | | | | | | | |
| Polypropylene Resin (B) | B-1 | L-MODU S400 | 60 | 15 | | | | 35 | | | | | | | | |
| | B-2 | L-MODU S600 | | | 15 | | | | | | | | | | | |
| | B-3 | L-MODU S901 | | | | 15 | 15 | | | | | | | | | |
| | B-6 | Vistamaxx 8380 | | 15 | 15 | 15 | 15 | | 35 | | | | | | | |
| | B-7 | Licocene 1602 | | | | | | | | 35 | | | | | | |
| | B-8 | Aerafin 180 | | | | | | | | | 35 | | | | | |
| | B-9 | Eastoflex P1010 | | | | | | | | | | 35 | | | | |
| | B-10 | Vestoplast 708 | | | | | | | | | | | 35 | | | |
| | B-11 | Vestoplast 704 | | | | | | | | | | | | 35 | | |
| | B-12 | Vestoplast 308 | | | | | | | | | | | | | 35 | |
| | B-13 | Vestoplast 828 | | | | | | | | | | | | | | 35 |
| Tackifying Resin (C) | C-1 | Escorez 5300 | | 40 | 40 | 40 | 40 | 20 | 20 | 20 | 20 | 20 | 20 | 20 | 20 | 20 |
| Low-Viscosity Oil (D) | D-1 | PW-90 | | 20 | 20 | 20 | 18 | | | | | | | | | |
| Wax (E) | E-1 | Hi-wax NP506 | | | | | 2 | 10 | 10 | 10 | 10 | 10 | 10 | 10 | 10 | 10 |
| Adhesion Force at 23°C (N) | | | 1.0 | 4.8 | 5.3 | 6.0 | 5.8 | 2.7 | 3.0 | 2.5 | 2.8 | 2.3 | 3.2 | 3.1 | 3.3 | 2.9 |

Table 7

| | | | Example | | | | | | | | | |
|---|---|---|---|---|---|---|---|---|---|---|---|---|
| | | | 60 | 61 | 62 | 66 | 68 | 70 | 72 | 63 | 64 | 65 |
| Amorphous Polyolefin Resin (A-1) | A1-9 | Indopol H-2100 | 10 | 10 | 10 | 10 | 10 | 10 | 10 | 20 | 20 | 20 |
| Polypropylene Resin (B) | B-1 | L-MODU S400 | 30 | | | 15 | | | | 20 | | |
| | B-2 | L-MODU S600 | | 30 | | | 15 | | | | 20 | |
| | B-3 | L-MODU S901 | | | 30 | | | 15 | 15 | | | 20 |
| | B-6 | Vistamaxx 8380 | | | | 15 | 15 | 15 | 15 | | | |
| Tackifying Resin (C) | C-1 | Escorez 5300 | 40 | 40 | 40 | 40 | 40 | 40 | 40 | 40 | 40 | 40 |
| Low-Viscosity Oil (D) | D-1 | PW-90 | 20 | 20 | 20 | 20 | 20 | 20 | 18 | 20 | 20 | 20 |
| Wax (E) | E-1 | Hi-wax NP506 | | | | | | | 2 | | | |
| Adhesion Force at 23°C (N) | | | 3.5 | 3.7 | 4.1 | 4.7 | 5.1 | 5.7 | 5.5 | 4.0 | 4.3 | 5.0 |

From the results in Tables 1 to 7, it is known that the resin composition of the present invention is excellent in adhesiveness.

Industrial Applicability

The resin composition of the present invention is excellent in adhesiveness, and is favorably used for pressure-sensitive adhesives, hot-melt adhesives, sealants and coking materials.

## Claims

**1.** A resin composition comprising at least one selected from the group consisting of an amorphous polyolefin resin (A-1) having a melt endotherm (ΔH-D) of less than 3 J/g, as read on a melt endotherm curve drawn by keeping a sample at -10°C in a nitrogen atmosphere for 5 minutes and then heating it at 10°C/min, using a differential scanning calorimeter (DSC), and a high-viscosity oil (A-2), and a polypropylene resin (B) having a melt endotherm (ΔH-D) of 3 J/g or more and 80 J/g or less, as read on a melt endotherm curve drawn by keeping a sample at -10°C in a nitrogen atmosphere for 5 minutes and then heating it at 10°C/min, using a differential scanning calorimeter (DSC), wherein:
relative to the total amount 100% by mass of the the amorphous polyolefin resin (A-1), the high-viscosity oil (A-2) and the polypropylene resin (B), the total of the amorphous polyolefin resin (A-1) and the high-viscosity oil (A-2) is 5.0% by mass or more and 99.5% by mass or less, and the amount of the polypropylene resin (B) is 0.5% by mass or more and 95.0% by mass or less.

**2.** The resin composition according to claim 1, wherein the polypropylene resin (B) satisfies the following (1):

(1) the resin has a melting point (Tm-D) of 0°C or higher and 120°C or lower that is defined as a peak top observed on the highest temperature side of a melt endotherm curve drawn by keeping a sample at -10°C in a nitrogen atmosphere for 5 minutes and then heating it at 10°C/min, using a differential scanning calorimeter (DSC) or does not exhibit a peak top on the highest temperature side.

**3.** The resin composition according to claim 1 or 2, wherein the limiting viscosity [η] of the polypropylene resin (B) is 0.01 dL/g or more and 2.00 dL/g or less.

**4.** The resin composition according to any one of claims 1 to 3, wherein the polypropylene resin (B) contains at least one structural unit selected from the group consisting of ethylene and an α-olefin having 4 to 30 carbon atoms in an amount of more than 0 mol% and 20 mol% or less.

**5.** The resin composition according to any one of claims 1 to 4, wherein the amorphous polyolefin resin (A-1) contains

a structural unit derived from at least one selected from the group consisting of propylene, isobutylene and isoprene.

**6.** The resin composition according to any one of claims 1 to 5, further comprising a tackifying resin (C).

**7.** The resin composition according to any one of claims 1 to 6, further comprising a low-viscosity oil (D).

**8.** The resin composition according to any one of claims 1 to 7, further comprising a wax (E).

**9.** The resin composition according to any one of claims 1 to 8, further comprising a polyolefin resin (F) not corresponding to any of the amorphous polyolefin resin (A-1) and the polypropylene resin (B).

**10.** The resin composition according to claim 9, wherein the polyolefin resin (F) has a melt endotherm ($\Delta H$-D) of more than 80 J/g, as read on a melt endotherm curve drawn by keeping a sample at -10°C in a nitrogen atmosphere for 5 minutes and then heating it at 10°C/min, using a differential scanning calorimeter (DSC).

**11.** A hot-melt adhesive comprising the resin composition of any one of claims 1 to 10.

[Fig. 1(a)]

(a)

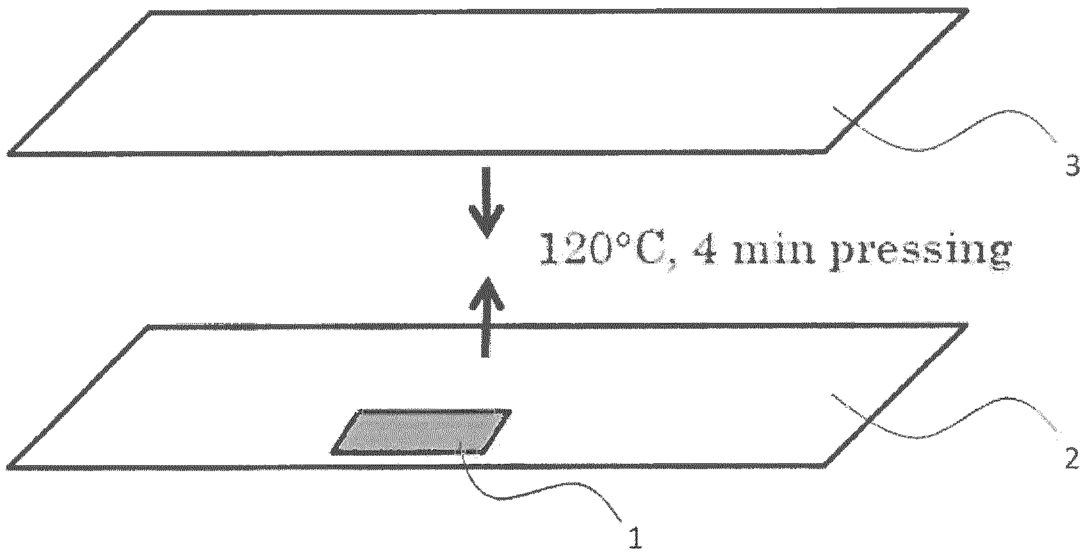


[Fig. 1(b)]

(b)

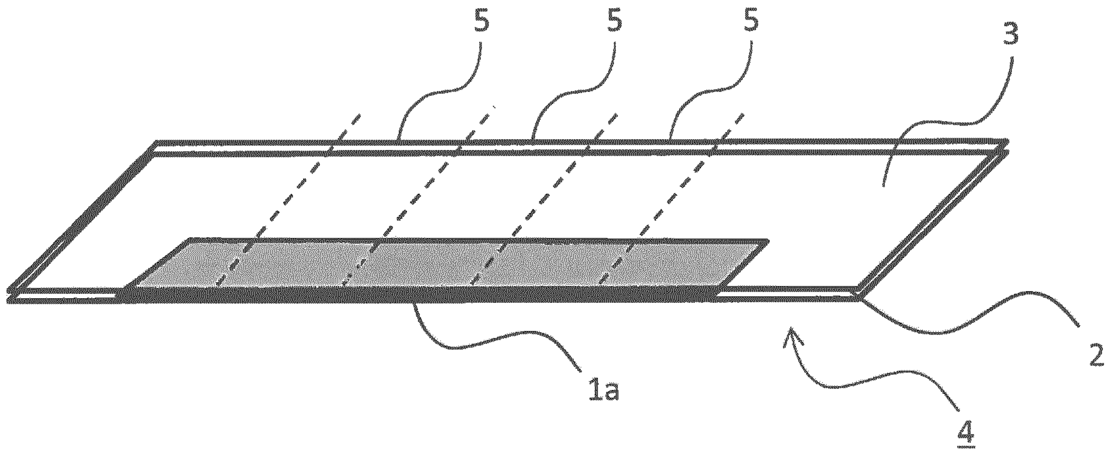

[Fig. 1(c)]

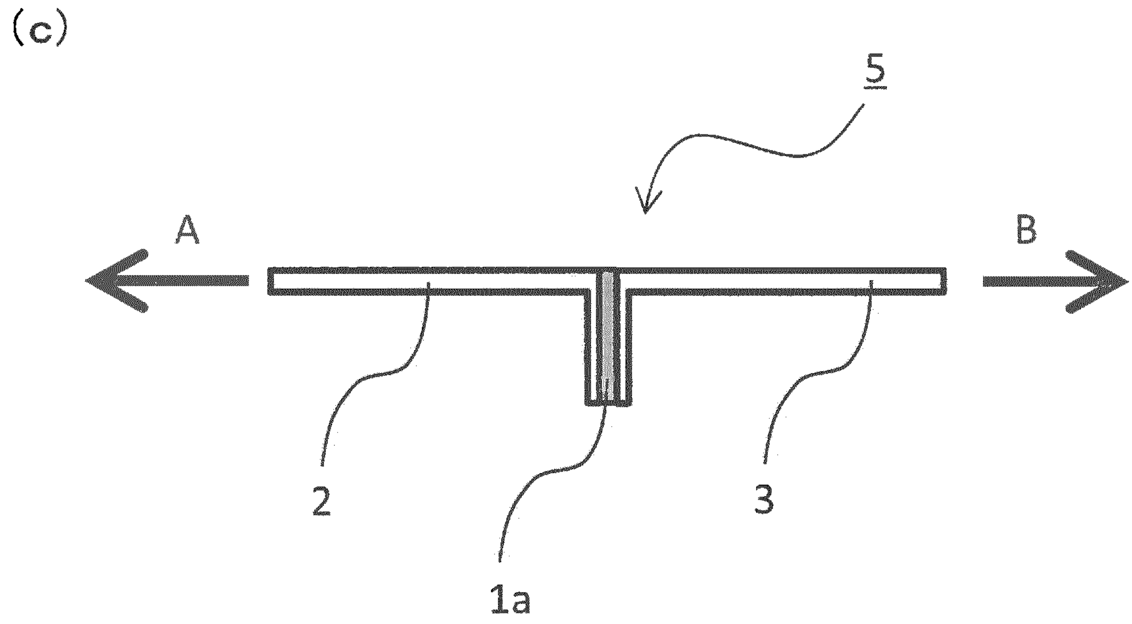

**INTERNATIONAL SEARCH REPORT**

International application No.
PCT/JP2019/007025

A. CLASSIFICATION OF SUBJECT MATTER
Int.Cl. C08L23/00(2006.01)i, C08L23/14(2006.01)i, C08L91/00(2006.01)i, C09J123/00(2006.01)i, C09J123/14(2006.01)i, C09J191/00(2006.01)i
According to International Patent Classification (IPC) or to both national classification and IPC

B. FIELDS SEARCHED
Minimum documentation searched (classification system followed by classification symbols)
Int.Cl. C08L23/00-23/36, C08L91/00-91/08, C09J123/00-123/36, C09J191/00-191/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2014/192767 A1 (IDEMITSU KOSAN CO., LTD.) 04 December 2014, claims, paragraphs [0069]-[0072], examples 1, 2 & US 2016/0115360 A1, claims, paragraphs [0069]-[0072], examples 1, 2 & EP 3006535 A1 & CN 105229108 A | 1-3, 5-8, 11<br>4, 9-10 |
| X<br>A | WO 2016/080297 A1 (MITSUI CHEMICALS, INC.) 26 May 2016, claims, paragraphs [0024]-[0030], [0086]-[0090], [0125], [0129], examples 1-15 & US 2017/0321093 A1, claims, paragraphs [0052]-[0062], [0140], [0144], [0190], [0195], examples 1-15 & EP 3222686 A1 & CN 107001841 A | 1-4, 6, 9, 11<br>5, 7-8, 10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 May 2019 (13.05.2019) | 21 May 2019 (21.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/007025

C (Continuation). DOCUMENTS CONSIDERED TO BE RELEVANT

| Category* | Citation of document, with indication, where appropriate, of the relevant passages | Relevant to claim No. |
|---|---|---|
| X<br>A | WO 2013/164976 A1 (MITSUI CHEMICALS, INC.) 07 November 2013, claims, paragraphs [0109]-[0113], [0123]-[0128], examples 1-8, 10-17 & US 2015/0087769 A1, claims, paragraphs [0135]-[0139], [0151], [0156], examples 1-8, 10-17 & EP 2845875 A1 & CN 104271660 A | 1-4, 6, 9, 11<br>5, 7-8, 10 |
| X<br>A | JP 2009-198753 A (SUMITOMO CHEMICAL CO., LTD.) 03 September 2009, claims, example 1 (Family: none) | 1, 3-5<br>2, 6-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014527559 A